# EUROPÄISCHE PATENTSCHRIFT

(11) **EP 3 598 892 B1**
(45) Veröffentlichungstag und Bekanntmachung des Hinweises auf die Patenterteilung: **19.02.2025**
(21) Anmeldenummer: 18185476.1
(22) Anmeldetag: 25.07.2018
(51) Int. Cl.: A01K 1/015

(54) **VERFAHREN ZUR HERSTELLUNG EINER STROHMATTE, STROHMATTE UND STROHSTALL**
STRAW LITTER, STRAW LITTER STALL AND METHOD FOR PRODUCING A STRAW LITTER
PROCÉDÉ DE FABRICATION D'UNE LITIERE DE PAILLE, LITIERE DE PAILLE, ET BÂTIMENT SUR PAILLE

(43) Veröffentlichungstag der Anmeldung: 29.01.2020
(73) Patentinhaber: Big Dutchman International GmbH, 49377 Vechta (DE); H. Bröring GmbH & Co. KG, 49413 Dinklage (DE)
(72) Erfinder: TOBERGTE, Christian, 49205 Hasbergen (DE); OLLIGES, Heinz, 26169 Friesoythe, Gehlenberg (DE)
(74) Vertreter: Eisenführ Speiser

(56) Entgegenhaltungen:
- EP-A1- 1 099 370
- EP-A1- 3 066 916
- EP-A2- 1 564 664
- EP-A2- 2 117 296
- FR-A1- 2 913 176
- JP-B2- 4 364 888
- US-A1- 2016 183 493
- PHILIPPE F X ET AL: "Ammonia and greenhouse gas emissions during the fattening of pigs kept on two types of straw floor", AGRICULTURE, ECOSYSTEMS AND ENVIRONMENT, ELSEVIER, AMSTERDAM, NL, vol. 150, 5 January 2012 (2012-01-05), pages 45 - 53, XP028463252, ISSN: 0167-8809, [retrieved on 20120113], DOI: 10.1016/J.AGEE.2012.01.006

## Beschreibung

Die vorliegende Erfindung betrifft ein Verfahren zur Herstellung einer Strohmatte für Nutztiere, insbesondere für Sauen und/oder Mastschweine und/oder Ferkel. Weiterhin wird einen Strohstall mit einer solchen Strohmatte offenbart, allerdings nicht beansprucht.

Verfahren und Vorrichtungen der eingangs genannten Art sind grundsätzlich aus dem Stand der Technik bekannt, beispielsweise aus Empfehlungen des Kuratoriums für Technik und Bauwesen in der Landwirtschaft e.V.. Insbesondere sind aus dem Stand der Technik Strohställe für Sauen, d. h. Ställe mit einer Strohmatte in einem Aufenthaltsbereich für die Sauen bekannt geworden.

Die vorliegende Erfindung hat nun erkannt, dass zwar derartige Strohställe bzw. entsprechende Strohmatten im Aufenthaltsbereich derartiger Strohställe zur Vermeidung von Gülleställen grundsätzlich bekannt geworden sind, um die mit Gülleställen verbundene Geruchsbelastung durch die Gülle zu vermeiden, dieser grundsätzliche Vorteil jedoch mit einer ganzen Reihe von Nachteilen erkauft wird. Denn die Erfindung hat unter anderem erkannt, dass diese Art der Ställe nach den Empfehlungen des Kuratoriums für Technik und Bauwesen in der Landwirtschaft e.V. einen relativ starken Einsatz von Stroh erfordern, der zu einem erheblichen Anwachsen der Mistmatte im Aufenthaltsbereich der Nutztiere führt. In Strohställen des Standes der Technik werden in diesem Zusammenhang üblicherweise Mistmattendicken von etwa 80 cm erzeugt. Diese großen Mistmengen erfordern wiederrum nachteiliger Weise in der Folge auch erhebliche Lagerkapazitäten und verursachen somit neben den Kosten für die erheblichen Strohmengen auch Kosten für die Lagerung des Mistes.

Darüber hinaus hat der Mist aus dieser Art von Strohstall nachteiliger Weise in der Regel unterhalb der oberen Schicht eine feucht-klebrige Konsistenz mit damit verbundenen, nicht unerheblichen Ammoniakemissionen aufgrund von Faulprozessen.

Zwar ist es aus dem Stand der Technik alternativ bekannt geworden, auch innerhalb eines Mastdurchgangs den Aufenthaltsbereich von der vorgenannten Mistmatte zu entmisten; dies führt allerdings unmittelbar zu dem Nachteil einer damit verbundenen Unruhe im Tierbestand und ist darüber hinaus auch ein logistisches Problem, da die Tiere beim Entmisten innerhalb eines Mastdurchgangs von ihren Haltungsflächen weg geführt werden müssen, um Platz für die für die Entmistung derartiger Mistmatten notwendigen Maschinen zu schaffen.

EP 1 564 664 A2 offenbart einen Roboter zur Reinigung eines Tiefstreuhauses, dessen Bodenfläche aus einer dicken Schicht von Einstreu besteht. EP 3 066 916 A1 offenbart einen Hängewagen für einen Viehstall für den Transport von Einstreu umfasst einen Behälter zur Aufnahme der Einstreu und einem Ausgabesystem, zur Ausgabe von der Einstreu an einen Liegeplatz des Viehs. US 2016/0183493 A1 offenbart eine Einrichtung für milchgebende Tiere umfassend Buchten in einem Freilaufstall und einen Melkstand, in dem die Tiere aus den Buchten gleichzeitig gemolken werden, während sie getrennt sind. EP 1 099 370 A1 offenbart eine Anlage zur Viehzucht und ein Verfahren zum Züchten von Vieh, wie Schweine, Rinder, Pferde, Schafe, Rehe und dergleichen, mit geringerem Arbeitsaufwand.

Eine Aufgabe der vorliegenden Erfindung ist es, Verfahren der eingangs genannten Art zur Verfügung zu stellen, welche eine wirtschaftlichere und zugleich artgerechte Haltung von Nutztieren in Strohställen in besserer Weise ermöglichen als derzeit bekannt.

Diese Aufgabe wird durch ein Verfahren zur Herstellung einer Strohmatte in einem in einem Strohstall vorgesehenen Aufenthaltsbereich für Nutztiere, insbesondere für Sauen und/oder Mastschweine und/oder Ferkel gemäß dem Gegenstand des unabhängigen Anspruchs 1 gelöst.

Ein Vorteil der vorliegenden Erfindung liegt insbesondere darin, dass durch das automatische Erst-Einstreuen von, bevorzugt zerfasertem, Stroh in den Aufenthaltsbereich bis zu einer im Wesentlichen gleichmäßigen Dicke der Strohmatte der Strohbedarf zur Herstellung eines Strohstalls erheblich reduziert wird. Denn zum einen wird durch das automatische Erst-Einstreuen von Stroh ein aufwendiges Einstreuen von Hand vermieden, wobei gleichzeitig durch die Automatisierung die für einen bestimmten Aufenthaltsbereich notwendige Strohmenge genau bestimmt und auch eingehalten werden kann. Darüber hinaus wird durch das automatische Erst-Einstreuen nur bis zu einer im Wesentlichen gleichmäßigen Dicke der Strohmatte im Aufenthaltsbereich erreicht, dass nur die absolut notwendige Mindest-Menge von Stroh für die Strohmatte benötigt wird.

Die Haltung von Nutztieren auf Stroh wird dank der Erfindung somit erheblich vereinfacht, da insbesondere der Stroh- und Personalaufwand bei der erfindungsgemäßen Haltung auf Stroh erheblich reduziert wird.

Durch die vorliegende Erfindung wird darüber hinaus eine bei einem Einstreuen von Hand nahezu immer vorhandene unregelmäßige Dicke der Strohmatte vermieden.

Insgesamt bietet die vorliegende Erfindung somit den Vorteil, dass der Strohverbrauch insgesamt gegenüber bekannten Strohställen um mindestens etwa 50 % reduziert wird, während gleichzeitig die Arbeitsbelastung für den Nutztierhalter bei einer erfindungsgemäß hergestellten Strohmatte durch das automatische Erzeugen einer gleichmäßigen Dicke ebenfalls ganz erheblich reduziert wird. Insbesondere bei der Ferkelaufzucht hat sich herausgestellt, dass der Strohbedarf in Kilogramm pro Tierplatz und Tag von einem aus dem Stand der Technik bekannt gewordenen Wert von 0,5 Kilogramm pro Tierplatz und Tag durch die vorliegende Erfindung auf unterhalb 0,2 Kilogramm pro Tierplatz und Tag reduzierbar ist.

Die vorliegende Erfindung zeichnet sich insbesondere durch den Vorteil aus, dass sie durch die erzeugte Strohmatte natürliches Tierverhalten adressiert und gleichzeitig Gülle vermeidet, während sie insbesondere im Vergleich zu den aus dem Stand der Technik bekannten Strohställen der eingangs genannten Art ganz erheblich weniger Mist produziert, um und zwar bis zu 50 % weniger Mist.

Die vorliegende Erfindung bietet insbesondere den weiteren Vorteil, dass trotz der vorstehend mehrfach beschriebenen Reduzierung der erforderlichen Strohmenge zur Herstellung der Strohmatte, aufgrund der erfindungsgemäß automatisierten erzeugten Gleichmäßigkeit der Strohmatte weiterhin Gelenks- und Knochenprobleme bei den Tieren nahezu ausgeschlossen werden können. Insbesondere treten bei einer Haltung von Nutztieren in einem Aufenthaltsbereich auf einer erfindungsgemäß hergestellten Strohmatte Abszesse aufgrund der Nachgiebigkeit der Strohmatte bei den Nutztieren nicht mehr auf. Auch ein Wundliegen wird durch die erfindungsgemäß hergestellte Strohmatte verhindert.

Als überraschender Vorteil der vorliegenden Erfindung hat sich herausgestellt, dass als Nutztiere sehr gut auch Ringelschwanzschweine auf Stroh gehalten werden können, da durch die Gegenstände der vorliegenden Erfindung ein aus dem Stand der Technik bekannt gewordenes, kannibalistisches Verhalten der Ringelschwanzschweine nahezu vollständig verhindert werden kann.

Im Übrigen vermeidet die vorliegende Erfindung auch die bei Haltung von Nutztieren auf Spaltenböden bekannt gewordenen Probleme, insbesondere können Schweine ihr natürliches Wühlverhalten auf einer bevorzugt dauerhaft frei von Löchern feuchten Stellen und/oder Fäulnis gehaltenen Strohmatte deutlich besser ausleben. Als weiterer überraschender Vorteil hat sich gezeigt, dass die hergestellte bzw. erhaltene Strohmatte bevorzugt auch Wärme erzeugen kann und somit bevorzugt zur Erwärmung eines entsprechenden Stallgebäudes und damit zu erheblicher Einsparung von Energiekosten beitragen kann.

Weitere bevorzugte Ausführungsformen der Erfindung sind in den Unteransprüchen angegeben.

Eine bevorzugte Ausführungsform der Erfindung zeichnet sich dadurch aus, dass das Erst-Einstreuen bis zu einer im Wesentlichen gleichmäßigen, maximal etwa 0,2 m, bevorzugt maximal etwa 0,1 m, weiter bevorzugt maximal etwa 0,05 m, betragenden Dicke der Strohmatte erfolgt. Durch die vorgenannten Dicken, weiter bevorzugt durch Dicken von etwa 0,2 m, etwa 0,1 m bzw. etwa 0,05 m werden die vorstehend beschriebenen Vorteile der Erfindung weiter verbessert. Insbesondere wird durch diese bevorzugten Dicken der Strohverbrauch noch weiter reduziert. Gleichzeitig hat die vorliegende Erfindung festgestellt, dass diese bevorzugten Dicken die Nachgiebigkeit bzw. Elastizität des durch die Strohmatte gebildeten Untergrundes für die Nutztiere erhalten, da durch das automatisierte Einstreuen des Strohs die Gleichmäßigkeit der Dicke der Strohmatte auch bei diesen bevorzugten, besonders geringen Dicken sichergestellt werden kann. Die Erfindung hat auch erkannt, dass nach dem Erst-Einstreuen und vor einem Besatz mit Nutztieren eine Dicke durch das automatisierte Erst-Einstreuen - soweit gewünscht und/oder erforderlich - auch problemlos in Anpassung an die jeweilige Nutztierart einstellbar ist.

In dem Aufenthaltsbereich ist ein Trennelement vorgesehen, welches einen Bewegungs- und Ruhebereich für die Nutztiere von einem Trink- und Fressbereich für die Nutztiere trennt, wobei das Erst-Einstreuen in dem Bewegungsbereich bis zu einer im Wesentlichen gleichmäßigen, maximal 50%, bevorzugt maximal 20%, einer an die Strohmatte direkt angrenzenden Höhe des Trennelements betragenden Dicke der Strohmatte erfolgt. Dies bietet den Vorteil, dass durch das Begrenzen der maximalen Dicke der erst-eingestreuten Strohmatte relativ zu dem Trennelement sichergestellt wird, dass möglichst kein Stroh in den Trink- und Fressbereich der Nutztiere gelangt, wodurch wiederum vorteilhaft verhindert wird, dass gegebenenfalls im Trink- und Fressbereich vorhandenes Wasser bzw. vorhandene Feuchtigkeit in die im Bewegungsbereich liegende Strohmatte eingetragen wird. Auf diese Weise wird vorteilhaft erreicht, dass die Strohmatte im Bewegungsbereich ausreichend trocken bleibt, um die gewünschte Elastizität der Strohmatte zu erhalten, um Wundliegen, Gelenks- und Knochenprobleme oder Abszesse bei den Nutztieren dauerhaft zu verhindern.

Eine bevorzugte Ausführungsform der Erfindung zeichnet sich aus durch den Schritt: Ausbringen eines einen Rotteprozess fördernden und Fäulnis im Wesentlichen verhindernden, bevorzugt einen mineralischen Bodenhilfsstoff aufweisenden, Kompostierungsmittels in den Aufenthaltsbereich. Diese Ausführungsform bietet den weiteren Vorteil, insbesondere bei Verwendung eines mineralischen Bodenhilfstoffes im Kompostierungsmittel, dass die ohnehin durch die erfindungsgemäß dünne Strohmatte vorliegende Reduzierung des Auftretens von Fäulnis in der Strohmatte weiter verbessert und insbesondere schädliche Keime in der Strohmatte verhindert werden. Stattdessen bilden sich bei dieser Ausführungsform vorteilhaft eine rotteprozessfördernde Bakterienflora sowie Wirkstoffe in der Strohmatte, die der Entwicklung von Krankheiten vorbeugen. Eine chemische Desinfektion der Strohmatte wird vorteilhaft nicht benötigt. Weiter vorteilhaft wird bei dieser Ausführungsform die Gefahr der Hospitalitis bei den Nutztieren noch weiter verringert.

Eine bevorzugte Ausführungsform der Erfindung zeichnet sich dadurch aus, dass das Erst-Einstreuen mit Stroh erfolgt, welches ein einen Rotteprozess förderndes und Fäulnis im Wesentlichen verhinderndes, bevorzugt einen mineralischen Bodenhilfsstoff enthaltendes, Kompostierungsmittel enthält. Bei dieser Ausführungsform wird das bevorzugt einen mineralischen Bodenhilfstoff enthaltene Kompostierungsmittel nicht separat, sondern zusammen mit dem Stroh der Erst-Einstreuung eingebracht. Auf diese Weise wird ein zusätzlicher Arbeitsgang zum Einbringen des Kompostierungsmittels eingespart.

Eine bevorzugte Ausführungsform der Erfindung zeichnet sich dadurch aus, dass als Bodenhilfsstoff aus natürlichen Steinen durch einen Mahlprozess gewonnene Steinmehle verwendet werden. Besonders bevorzugt werden hierfür beispielsweise die Gesteinsarten Quarzit, Granit, Schiefer, Diabas und/oder Basalt verwendet.

Die Erfindung zeichnet sich aus durch den Schritt: Die Dicke der Strohmatte wird nach dem Erst-Einstreuen durch automatisches, bedarfsgerechtes Nachstreuen um maximal etwa 20%, bevorzugt maximal etwa 10%, weiter bevorzugt maximal etwa 5%, der Dicke der nach dem Erst-Einstreuen vorhandenen Strohmatte erhöht. Die Vorteile liegen insbesondere in der Sicherstellung eines geringen und kontrollierten Anwachsens der Strohmatte durch automatisches, bedarfsgerechtes Nachstreuen eines vorbestimmten Prozentsatzes der bereits vorhandenen Dicke. Hierbei werden die eingangs genannten erfindungsgemäßen Vorteile in besonders effektiver Weise realisiert, da durch das bedarfsgerechte Nachstreuen ein unkontrolliertes Anwachsen der Mistmatte, wie es aus dem Stand der Technik bekannt ist, verhindert wird. Vielmehr wird bei dieser Ausführungsform vorteilhaft eine absolute Minimierung des Strohverbrauchs zum Erhalten der zur Realisierung der eingangs genannten Vorteile notwendigen Elastizität der Strohmatte erzielt. Ein weiterer Vorteil besteht darin, dass durch den weiter reduzierten Gesamtstrohverbrauch auch der Mistanfall insgesamt weiter reduziert wird. Ein weiterer besonderer Vorteil dieser Ausführungsform liegt darin, dass sich das Klima in einem Strohstall mit einer erfindungsgemäß hergestellten Strohmatte dieser Ausführungsform weiter verbessert, da die Ammoniakbelastung in der Stallluft weiter reduziert wird. Gleichzeitig wird durch das bedarfsgereichte Nachstreuen auch der Fliegenbefall von Nutztieren auf einer derart hergestellten Strohmatte weiter reduziert.

Eine bevorzugte Ausführungsform der Erfindung zeichnet sich aus durch den Schritt: Die Dicke der Strohmatte wird nach dem Erst-Einstreuen durch automatisches, bedarfsgerechtes Nachstreuen in einem Bereich von maximal etwa 0,5 m, bevorzugt maximal etwa 0,3 m, weiter bevorzugt maximal etwa 0,2 m, noch weiter bevorzugt maximal 0,1 m, eingestellt. Die Erfindung hat erkannt, dass sich die Vorteile der vorliegenden Erfindung insbesondere mit den vorstehenden Bemaßungen der maximalen Dicke der Strohmatte nach dem automatischen, bedarfsgerechten Nachstreuen realisieren lassen. Dabei hat die Erfindung auch erkannt, dass nach dem Nachstreuen Dicken im Bereich von etwa 0,3 m bis 0,5 m besonders für Mastschweine geeignet sind, während Dicken nach dem Nachstreuen in einem Bereich von etwa 0,2 m bis etwa 0,3 m besonders für Sauen geeignet sind, während Dicken nach dem Nachstreuen in einem Bereich von etwa 0,1 m bis etwa 0,2 m besonders für Ferkel geeignet sind. Denn die Erfindung hat erkannt, dass sich die Dicken der Strohmatte nach dem Erst-Einstreuen durch automatisiertes, bedarfsgerechtes Nachstreuen an das Gewicht der Nutztiere anpassen lassen, um den Strohverbrauch bzw. den anfallenden Mist angepasst an das Gewicht der Tiere noch weiter zu reduzieren, während die eingangs beschriebenen Vorteile der Erfindung weiter erhalten bleiben.

Eine bevorzugte Ausführungsform der Erfindung zeichnet sich aus durch den Schritt: In dem Strohstall, bevorzugt im Aufenthaltsbereich, weiter bevorzugt in einem Bereich direkt oberhalb, bevorzugt etwa 1 bis etwa 2,4 m, weiter bevorzugt etwa 1 bis etwa 2 m, noch weiter bevorzugt etwa 1 bis etwa 1,5 m oberhalb, der Strohmatte, wird eine bestimmte Lufttemperatur und/oder eine bestimmte Luftfeuchtigkeit und/oder eine bestimmte CO₂-Konzentration und/oder eine bestimmte NH₃-Konzentration und/oder ein bestimmter Luftdruck eingestellt. Diese Ausführungsform der Erfindung bietet insbesondere den Vorteil, dass das Stallklima bei einer derart hergestellten Strohmatte weiter verbessert wird, die Ammoniakbelastung in der Stallluft weiter reduziert wird, der Fliegenbefall weiter verringert wird, und vor allen Dingen eine derart hergestellte Strohmatte für die Dauer eines vollständigen Durchgangs im Strohstall verbleiben kann. Unter einem Durchgang ist in der vorliegenden Offenbarung ein Zeitraum vom Ein- bis zum Ausstallen der Tiere zu verstehen, wobei dieser Zeitraum in einer dem Fachmann bekannten Weise davon abhängig ist, ob Ferkel oder Sauen gehalten oder eine Mast durchgeführt wird.

Eine bevorzugte Ausführungsform der Erfindung zeichnet sich dadurch aus, dass die Lufttemperatur und/oder der CO₂-Gehalt der Luft und/oder die Luftfeuchtigkeit als Regelgröße zum Erhalt der Stroh- bzw. Mistmatte verwendet werden.

Eine bevorzugte Ausführungsform der Erfindung zeichnet sich dadurch aus, dass die Luftfeuchtigkeit in dem Strohstall, bevorzugt in dem Aufenthaltsbereich, weiter bevorzugt in einem Bereich oberhalb der Strohmatte, unterhalb des Taupunktes eingestellt wird.

Eine bevorzugte Ausführungsform der Erfindung zeichnet sich aus durch die Schritte: Ein Vorhandensein von im Verhältnis zur übrigen Strohmatte feuchteren Stellen der Strohmatte wird automatisch erfasst, und auf die erfassten, im Verhältnis zur übrigen Strohmatte feuchteren Stellen der Strohmatte wird automatisch gezielt, bevorzugt als Gemisch aus zerfasertem und langfaserigem Stroh vorliegendes, weiter bevorzugt ein einen Rotteprozess förderndes und Fäulnis im Wesentlichen verhinderndes, noch weiter bevorzugt einen mineralischen Bodenhilfsstoff enthaltendes, Kompostierungsmittel enthaltendes, Stroh nachgestreut. Bei dieser Erfindung wird besonders vorteilhaft der Strohverbrauch weiter reduziert, da nur an den im Verhältnis zur übrigen Strohmatte feuchteren Stellen der Strohmatte gezielt Stroh nachgestreut wird.

Beschrieben wird ferner eine Strohmatte. Ein Vorteil der gleichmäßig und trittelastisch im Aufenthaltsbereich verteilten Strohmatte liegt insbesondere darin, dass sich die Tiere im Aufenthaltsbereich nicht ungleichmäßig verteilen und somit die Ungleichmäßigkeit der Strohmatte nicht weiter verstärken. Dies hat wiederum zur Folge, dass ein freiliegender Boden im Aufenthaltsbereich dauerhaft vermieden wird, so dass dadurch die Strohmatte im gesamten Aufenthaltsbereich dauerhaft trittelastisch bleibt, so dass durch die hergestellte Strohmatte insbesondere Gelenks- und Knochenprobleme, Abszesse oder ein Wundliegen der Tiere dauerhaft verhindert werden.

Eine bevorzugte Ausführungsform der Strohmatte zeichnet sich dadurch aus, dass die Dicke nach einem Erst-Einstreuen von Stroh und vor dem Besatz mit Nutztieren maximal 0,2 m, bevorzugt maximal 0,1 m, weiter bevorzugt maximal 0,05 m, beträgt. Durch die vorgenannten Dicken, weiter bevorzugt durch Dicken von etwa 0,2 m, etwa 0,1 m bzw. etwa 0,05 m, werden die eingangs genannten Vorteile weiter verstärkt. Insbesondere wird durch diese bevorzugten Dicken der Strohmatte der Strohverbrauch weiter reduziert. Gleichzeitig wurde festgestellt, dass durch die bevorzugten Dicken die Nachgiebigkeit bzw. Elastizität der Strohmatte dauerhaft erhalten werden kann, da durch die erforderliche Gleichmäßigkeit der Strohmatte die Nachgiebigkeit auch bei diesen geringen Dicken in ausreichender Form sichergestellt werden kann, während gleichzeitig der Strohverbrauch noch weiter reduziert wird, so dass sich die Wirtschaftlichkeit der hergestellten Strohmatte erheblich von der Wirtschaftlichkeit der bekannten Strohmatten unterscheidet. In diesem Zusammenhang wurde auch erkannt, dass eine Dicke nach einem Erst-Einstreuen von Stroh und vor dem Besatz mit Nutztieren von etwa 0,2 m bei Mastschweinen bevorzugt ist, von etwa 0,1 m bei Sauen bevorzugt ist, und von etwa 0,05 m bei Ferkeln bevorzugt ist, da durch die unterschiedlichen Gewichte der unterschiedlichen Nutztierarten die Dicke in Anpassung an das durchschnittliche Gewicht der jeweiligen Nutztierart bis zu den vorgenannten Dicken reduzierbar ist, um einen minimalen Strohverbrauch bei gleichzeitiger Sicherstellung der Trittelastizität zu erzielen.

Eine bevorzugte Ausführungsform der Strohmatte zeichnet sich dadurch aus, dass die Dicke nach dem Besatz mit Nutztieren im Durchschnitt maximal 0,5 m, bevorzugt maximal 0,3 m, weiter bevorzugt maximal 0,2 m, noch weiter bevorzugt maximal 0,1 m, beträgt. Es wurde erkannt, dass sich die eingangs genannten Vorteile insbesondere mit den vorstehenden Bemaßungen der maximalen Dicken der Strohmatte nach dem Besatz mit Nutztieren realisieren lassen. Dabei wurde auch erkannt, dass nach dem Besatz mit Nutztieren, insbesondere durch automatisches, bedarfsgerechtes Nachstreuen von Stroh im Aufenthaltsbereich der Nutztiere, Dicken im Bereich von etwa 0,3 m bis 0,5 m besonders für Mastschweine geeignet sind, während Dicken nach dem bevorzugt automatischen, bedarfsgerechten Nachstreuen von Stroh in einem Bereich von etwa 0,2 m bis etwa 0,3 m besonders für Sauen geeignet sind, während Dicken nach einem bevorzugt automatischen, bedarfsgerechten Nachstreuen von Stroh im Aufenthaltsbereich der Nutztiere in einem Bereich von etwa 0,1 m bis etwa 0,2 m besonders für Ferkel geeignet sind. Denn es wurde auch erkannt, dass sich die Dicken der Strohmatten auch nach dem Erst-Einstreuen durch beispielsweise automatisch durchgeführtes, bedarfsgerechtes Nachstreuen gezielt an das Gewicht der entsprechenden Nutztierart anpassen lassen, um den Strohverbrauch bzw. die Menge des anfallenden Mistes auch nach dem Erst-Einstreuen angepasst an das Gewicht der Tiere noch weiter zu reduzieren, während die eingangs beschriebenen Vorteile durch die vorgenannten Dicken weiter erhalten bleiben.

Es wird auch einen Strohstall offenbart, deren Vorteile identisch zu den eingangs genannten Vorteilen sind. Insbesondere weist der Strohstahl auch die vorstehend genannten Vorteile der hergestellten Strohmatte auf, da der Strohstall die hergestellte Strohmatte in seinem Aufenthaltsbereich aufweist.

Der Strohstall zeichnet sich durch einen als der Aufenthaltsbereich dienenden, im Wesentlichen ebenen, bevorzugt spaltenfreien, Boden, und einen gegenüber dem Boden, bevorzugt um mindestens etwa 0,2 m bis mindestens etwa 0,5 m, weiter bevorzugt treppenförmig, erhöhten, als Fütterungs- und/oder Tränkenbereich dienenden Sockel aus. Der Vorteil des gegenüber dem Bewegungsbereich erhöhten, als Fütterungs- und/oder Tränkenbereich dienenden Sockel liegt insbesondere darin, dass der als Fütterungs- und/oder Tränkenbereich dienende Sockel auf einfache Art und Weise von Stroh freigehalten werden kann, da dieses bevorzugt nur im Bewegungsbereich eingestreut wird, wodurch wiederum sichergestellt wird, dass möglichst kein Stroh in den Fütterungs- und/oder Tränkenbereich gelangt, wodurch wiederum vorteilhaft verhindert wird, dass gegebenenfalls im Fütterungs- und/oder Tränkenbereich vorhandenes Wasser bzw. vorhandene Feuchtigkeit in die im Bewegungsbereich vorhandene Strohmatte eingetragen wird. Auf diese Weise wird vorteilhaft erreicht, dass die Strohmatte im Bewegungsbereich ausreichend trocken bleiben kann, um die gewünschte Elastizität der erfindungsgemäßen Strohmatte im Bewegungsbereich erhalten zu können, um die erfindungsgemäßen Vorteile des Verhinderns von Wundliegen, Gelenks- und Knochenproblemen oder Abszessen der Nutztiere dauerhaft in einem solchen Strohstall erhalten zu können.

Bevorzugt nimmt der Sockel eine Fläche von etwa 20 % des Aufenthaltsbereiches ein. Dies hat sich als eine artgerechte Aufteilung erwiesen.

Bevorzugt ist der Sockel-Boden leicht angeraut, um den Nutztieren vorteilhaft einen Klauen-Abrieb im Bereich des Sockels zu ermöglichen.

Bevorzugt weist der Bewegungsbereich eine einzige Ablaufrinne auf, um beim Ausmisten des Strohstalls notwendiges Reinigungswasser abführen zu können.

Eine bevorzugte Ausführungsform des erfindungsgemäßen Strohstalls zeichnet sich durch eine Klimatisierungseinrichtung zur Einstellung einer bestimmten Lufttemperatur und/oder Luftfeuchtigkeit im Strohstall aus, wobei die Lufttemperatur und/oder die Luftfeuchtigkeit bevorzugt in einem Bereich direkt oberhalb, weiter bevorzugt 1 bis 2,4 m, noch weiter bevorzugt 1 bis 2 m, noch weiter bevorzugt 1 bis 1,5 m oberhalb, der Strohmatte eingestellt wird. Die Vorteile dieser Ausführungsform liegen insbesondere darin, dass das Stallklima in einem derartigen Stall weiter verbessert wird, die Ammoniakbelastung in der Stallluft weiter reduziert wird, der Fliegenbefall weiter verringert wird, und vor allen Dingen ein derartiger Strohstall den Vorteil aufweist, dass die im Aufenthaltsbereich, bevorzugt im Bewegungsbereich, befindliche Strohmatte für die Dauer eines vollständigen Durchgangs im Strohstall verbleiben kann, bevor dieser ausgemistet werden muss.

Eine bevorzugte Ausführungsform des erfindungsgemäßen Strohstalls zeichnet sich dadurch aus, dass die Klimatisierungseinrichtung derart ausgebildet ist, dass die Klimaparameter zur Ermittlung der Regelgröße direkt oberhalb, bevorzugt 1 bis 2, 4 m, noch weiter bevorzugt 1-2 m, noch weiter bevorzugt 1-1,5 m oberhalb, der Strohmatte unterhalb des Taupunktes einstellbar ist.

Eine bevorzugte Ausführungsform des erfindungsgemäßen Strohstalls zeichnet sich dadurch aus, dass die Klimatisierungseinrichtung derart ausgebildet ist, dass die Lufttemperatur und/oder der CO₂-Gehalt der Luft und/oder die Luftfeuchtigkeit als Regelgröße zum Erhalt der Stroh- bzw. Mistmatte verwendet werden. Denn es hat sich gezeigt, dass bei derartigen Werten die eingangs genannten Vorteile besonders deutlich hervortreten.

Der Strohstall weist eine automatische Einstreueinrichtung zum Erst-Einstreuen von Stroh für die Strohmatte und ggf. zum Nachstreuen von Stroh für die Strohmatte auf, wobei die automatische Einstreueinrichtung bevorzugt mit Sensoren zum Erfassen von im Verhältnis zur übrigen Strohmatte feuchteren Stellen der Strohmatte ausgerüstet ist, um weiter bevorzugt auf diese feuchteren Stellen gezielt Stroh nachzustreuen. Die Vorteile einer automatischen Einstreueinrichtung liegen insbesondere darin, dass vollständig auf das Einstreuen von Hand und den damit verbundenen zeit- und kostenintensiven Personalaufwand verzichtet werden kann. Das Vorsehen einer automatischen Einstreueinrichtung bringt somit ganz erhebliche wirtschaftliche Vorteile. Gleichzeitig wird eine dem Tierverhalten angepasste Haltung der Nutztiere sichergestellt, da die automatische Einstreueinrichtung sicherstellt, dass überall im Bewegungsbereich eine Strohmatte mit gleichmäßiger Dicke vorhanden ist. Die bevorzugte Ausstattung der automatischen Einstreueinrichtung mit Sensoren zum Erfassen von im Verhältnis zur übrigen Strohmatte feuchteren Stellen der Strohmatte, bietet den Vorteil, dass damit vollautomatisch und gezielt festgestellt werden kann, an welcher Stelle die Strohmatte feuchter geworden ist, so dass bei dieser Ausführungsform vollautomatisch und gezielt festgestellt werden kann, an welchen Stellen gegebenenfalls ein Nachstreuvorgang von Stroh vorgenommen werden muss. Diese Ausführungsform stellt somit sicher, dass nur die absolut notwendige Mindest-menge von Stroh nachgestreut werden muss, da ein Nachstreuen von Stroh nur an im Verhältnis zur übrigen Strohmatte feuchteren Stellen der Strohmatte notwendig ist. Bei der weiter bevorzugten Ausführungsform, dass nur auf die feuchteren Stellen gezielt Stroh nachgestreut werden muss, werden die vorgenannten Vorteile in besonders einfacher Weise mit Hilfe der automatischen Einstreueinrichtung umgesetzt.

Eine bevorzugte Ausführungsform des Strohstalls zeichnet sich dadurch aus, dass es sich bei den Sensoren um optische, bevorzugt im Infrarotbereich arbeitende, und/oder um akustische, bevorzugt im Ultraschallbereich arbeitende, und/oder um induktive und/oder um kapazitive Sensoren handelt. Mit Hilfe derartiger Sensoren, deren Ausführung im Einzelnen dem Fachmann technisch geläufig ist, lässt sich die Automatisierung des Nachstreuvorgangs besonders einfach realisieren.

Eine bevorzugte Ausführungsform des Strohstalls zeichnet sich dadurch aus, dass mit einem als automatische Einstreueinrichtung dienendem Portalsystem mit einem Strohkorb zur Aufnahme von einzustreuendem Stroh derart, dass mittels des Portalsystems Stroh über jedem Abschnitt des Aufenthaltsbereichs abwerfbar ist. Ein solcher Strohstall weist den weiteren Vorteil auf, dass durch das erfindungsgemäße Portalsystem mit einem Strohkorb zur Aufnahme von einzustreuendem Stroh, wobei mittels des Portalsystems Stroh über jedem Abschnitt des Aufenthaltsbereichs abwerfbar ist, die Automatisierung des Erst-Einstreuens bzw. des bedarfsgerechten Nachstreuen besonders einfach realisiert werden kann. Denn eine ein solches Portalsystem aufweisende automatische Einstreueinrichtung, bevorzugt mit Sensoren zum Erfassen von im Verhältnis zur übrigen Strohmatte feuchteren Stellen der Strohmatte, kann in besonders einfacher Art und Weise jeden Punkt innerhalb eines Aufenthaltsbereiches erreichen und ist somit in der Lage, über jedem Punkt innerhalb des Aufenthaltsbereiches gezielt nur die Menge Stroh abzuwerfen, die für eine Erst-Einstreuung bzw. die für ein gezieltes Nachstreuen eines beispielsweise mit den Sensoren erfassten feuchteren Bereiches der Strohmatte erforderlich ist. Somit kann mit einem solchen Portalsystem das erfindungsgemäße Verfahren zur Herstellung einer Strohmatte in einem in einem Strohstall vorgesehenen Aufenthaltsbereich für Nutztiere besonders kostengünstig umgesetzt werden. Besonders vorteilhaft ist es darüber hinaus, dass derartige Portalsysteme auch bei bestehenden Strohställen auf einfache Art und Weise nachgerüstet werden können.

Ein hier offenbartes Stallgebäude weist alle eingangs genannten Vorteile auf, da es einen Strohstall aufweist, der wiederrum eine Strohmatte aufweist.

Bevorzugte Ausführungsformen der Erfindung werden im Folgenden anhand der beiliegenden Zeichnungen beschrieben. Im Zweifel sind gleiche oder funktionsgleiche Teile mit den gleichen Bezugszeichen bezeichnet. Die Zeichnungen zeigen:
- Figur 1: eine perspektivische Ansicht einer Ausführungsform eines Stallgebäudes ohne Dach;
- Figur 2: eine schematische Schnittansicht einer Ausführungsform einer Strohmatte;
- Figur 3: eine schematische Schnittansicht einer Ausführungsform eines Strohstalls;
- Figur 4: eine schematische Draufsicht auf eine weitere Ausführungsform eines Stallgebäudes ohne Dach;
- Figur 5: eine teilweise geschnittene Seitenansicht des Stallgebäudes der Figur 4;
- Figur 6: eine vergrößerte, perspektivische Einzelansicht des Strohkorbes der Figuren 4 und 5; und
- Figur 7: eine schematische Darstellung einer Ausführungsform des erfindungsgemäßen Verfahrens.

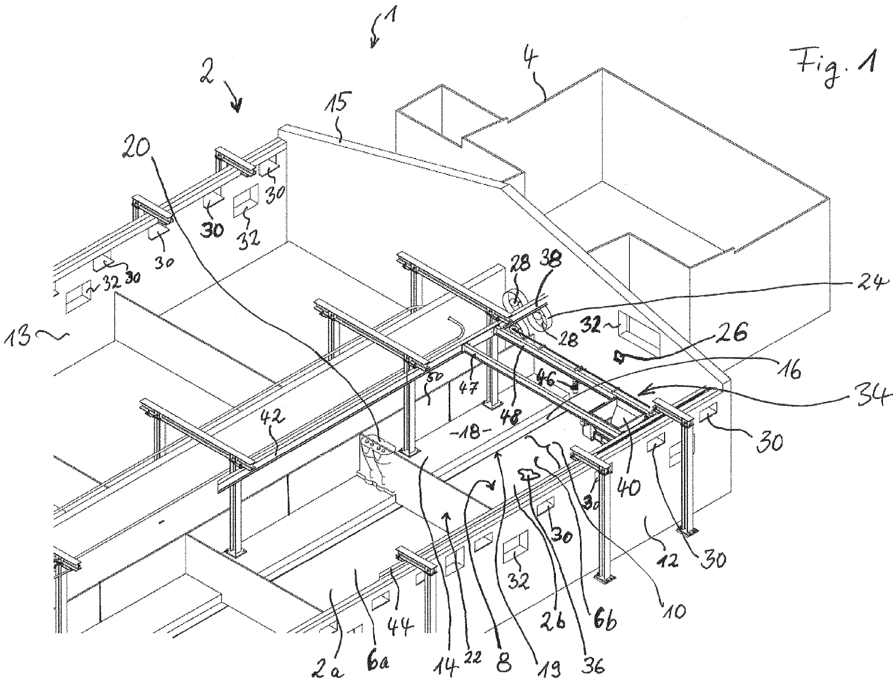

Figur 1 zeigt eine perspektivische, schematische Ansicht einer Ausführungsform eines Stallgebäudes 1 ohne Dach. Das Stallgebäude 1 weist einen Strohstall 2 und ein für die vorliegende Erfindung nicht relevantes Nebengebäude 4 auf. Der Strohstall 2 ist in den beiden in der Figur 1 rechts unten dargestellten Buchten 2a und 2b mit Strohmatten ausgebildet, während die übrigen Buchten aus rein zeichnerischen Gründen zur Vervollständigung des Stallgebäudes 1 dargestellt sind, jedoch auch weggelassen werden können. Für die Realisierung des in der Figur 1 dargestellten Stallgebäudes 1 bzw. des Strohstalls 2 ist eine der Buchten 2a bzw. 2b vollständig ausreichend. Der Strohstall 2 gemäß Figur 1 zumindest in jeder der Buchten 2a und 2b jeweils einen Aufenthaltsbereich 6a bzw. 6b für Nutztiere, beispielswiese für Sauen und/oder Mastschweine und/oder Ferkel auf.

Zur Vereinfachung der weiteren Beschreibung wird im Folgenden nur der Aufenthaltsbereich 6b des Strohstalls 2 näher beschrieben. Der Aufenthaltsbereich 6a ist jedoch bevorzugt funktionsgleich ausgebildet.

Der Aufenthaltsbereich 6b weist eine Strohmatte 8 auf. Die Strohmatte 8 weist eine im Wesentlichen gleichmäßige im Wesentlichen trittelastische Dicke auf. Der Strohstall weist in der Bucht 2b einen in der Figur 1 durch die Strohmatte 8 verdeckten, als Bewegungsbereich 10 dienenden, im Wesentlichen ebenen, bevorzugt spaltenfreien Boden auf. Der Bewegungsbereich 10 ist in der Figur 1 aus rein darstellerischen Gründen mit der geschwunggenen Klammer nur im sichtbaren Bereich eingezeichnet; der Bewegungsbereich 10 erstreckt sich jedoch tatsächlich bis zu einer Seitenwand 12 des Stallgebäudes 2.

Auf der der Seitenwand 12 abgewandten Seite des Bewegungsbereichs 10 grenzt der Bewegungsbereich 10 an einem treppenförmig erhöhten, als Fütterungs- und/oder Tränkenbereich dienenden Sockel 14 des Aufenthaltsbereichs 6b. Der Sockel 14 weist eine gegenüber dem Boden im Bewegungsbereich 10 um 0,2 m erhöhte Stufe 16 auf. Weiterhin weist der Sockel 14 eine obere Fläche 18 auf, die erneut gegenüber der Ebene der Stufe 16 um 0,2 m erhöht ist. Die Oberfläche 18 ist leicht angeraut, um einen Klauen-Abrieb für die Nutztiere zu ermöglichen, wenn sie sich auf der Ebene 18 befinden. In der in Figur 1 dargestellten Ausführungsform weist die Strohmatte 8 ebenfalls eine Dicke von 0,2 m auf, so dass die Oberfläche der Strohmatte 8 und die Oberfläche der Stufe 16 in einer Ebene liegen und an der Linie 19 der Figur 1 aneinandergrenzen.

Zur Vervollständigung des als Fütterungs- und/oder Tränkenbereich dienenden Sockels 14 ist dieser mit einer Fütterungs- und Tränkenstation 20 ausgestattet, die in eine Buchtentrennwand 22 zur Abtrennung der Bucht 2a von der Bucht 2b integriert ist.

Durch die Treppenstufe 16 wird die Strohmatte 8 von der Oberfläche 18 des Sockels 14 sowohl horizontal als auch vertikal beabstandet, so dass im Wesentlichen kein Stroh der im Bewegungsbereich 10 liegenden Strohmatte 8 auf die Oberfläche 18 gelangt.

Der Strohstall 2 der in der Figur 1 dargestellten Ausführungsform weist darüber hinaus eine Klimatisierungseinrichtung 24 zur Einstellung einer bestimmten Luftfeuchtigkeit im Strohstall 2 auf. Die Klimatisierungseinrichtung 24 ist so ausgebildet, dass mit ihrer Hilfe in einem Bereich von etwa 1 bis etwa 2 m oberhalb der Strohmatte 8 die Luftfeuchtigkeit auf einen bestimmten gewünschten Wert einstellbar ist. Zu diesem Zweck weist die Klimatisierungseinrichtung 24 einen Sensor zur Feststellung der Luftfeuchtigkeit in der Bucht 2b auf, der mit einer nicht dargestellten Regelelektronik der Klimatisierungseinrichtung 24 verbunden ist, um mit Hilfe von Lüfterrädern 28 der Klimatisierungseinrichtung 24 entsprechend vorbehandelte Luft in die Bucht 2b einzublasen. Ebenso ist es möglich, dass mit Hilfe der Lüfterräder 28 Luft aus der Bucht 2b abgesaugt, getrocknet oder befeuchtet und wieder durch mindestens eines der Lüfterräder 28 in die Bucht 2b eingeblasen wird. Zur Abführung oder Zuführung von Luft weist das Stallgebäude 2 darüber hinaus insbesondere im Bereich der Buchten, und somit insbesondere auch im Bereich der Bucht 2b Lüfterklappen 30 auf, die bevorzugt durch nicht dargestellte Aktuatoren durch die Steuerung der Klimatisierungseinrichtung 24 zur Abführung von Luft aus der Bucht 2b oder zur Zuführung von Frischluft in die Bucht 2b geöffnet oder geschlossen werden können.

Darüber hinaus weist der Strohstall 2 in der Seitenwand 12, in der gegenüberliegenden Seitenwand 13 und in der in Figur 1 zum Nebengebäude 4 hin liegenden Wand 15 Fenster 32 auf, die einen Lichteinfall in die Buchten des Strohstalls 2, somit insbesondere auch in die Bucht 2b ermöglichen. Optional können die Fenster 32 auch geschlossen werden.

Der Strohstall 2 weist weiterhin eine automatische Einstreueinrichtung 34 zum Erst-Einstreuen von Stroh für die Strohmatte 8 und zum Nachstreuen von Stroh für die Strohmatte 8 auf, wobei die automatische Einstreueinrichtung 34 nicht dargestellte Sensoren zum Erfassen von im Verhältnis zur übrigen Strohmatte 8 feuchteren Stellen 36 der Strohmatte ausgerüstet ist, um auf diese feuchteren Stellen 36 gezielt Stroh auf die Strohmatte 8 nachstreuen zu können. In der Figur 1 ist die feuchtere Stelle 36 nur schematisch und auch nur symbolisch dargestellt. Die feuchtere Stelle 36 kann sich vielmehr an jeder Stelle auf der Strohmatte 8 innerhalb des von der Stufe 16 an der Linie 19, von der Buchtenwand 22, von der Außenwand 12 und von der Vorderwand 15 begrenzten Bewegungsbereichs 10 auf der Strohmatte befinden.

Bei den nicht dargestellten Sensoren der automatischen Einstreueinrichtung 34 handelt es sich beispielsweise um optische, bevorzugt im Infrarotbereich arbeitende, und/oder um akustische, bevorzugt im Ultraschallbereich arbeitende, und/oder um induktive und/oder um kapazitive Sensoren.

In dem in Figur 1 dargestellten Stallgebäude 1 bzw. Strohstall 2 umfasst die automatische Einstreueinrichtung ein Portalsystem 38 mit einem Strohkorb 40 zur Aufnahme von in den durch Bewegungsbereich 10 und Sockel 14 gebildeten Aufenthaltsbereich 6b der Bucht 2b einzustreuendem Stroh zum Erst-Einstreuen von Stroh bzw. vom Nachstreuen von Stroh für die Strohmatte 8.

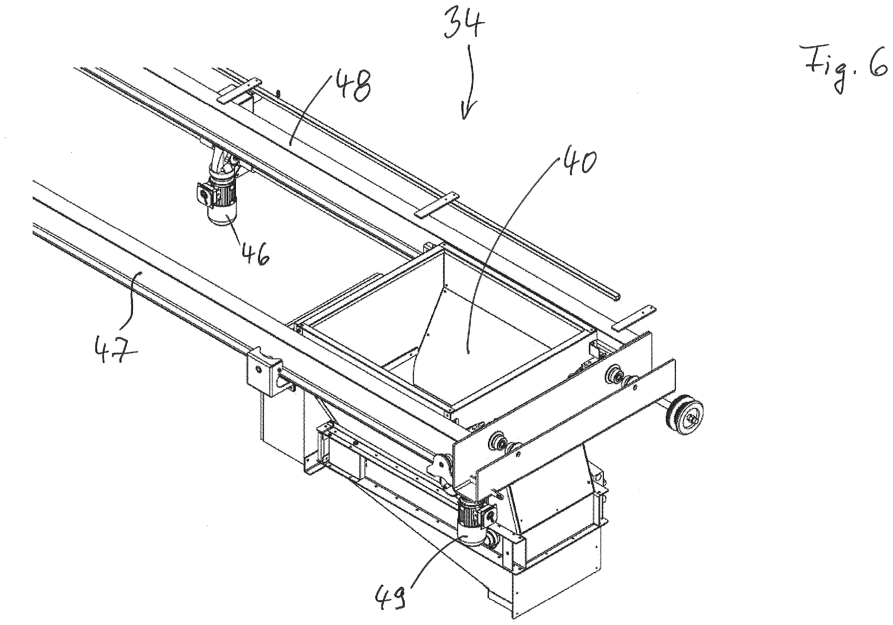

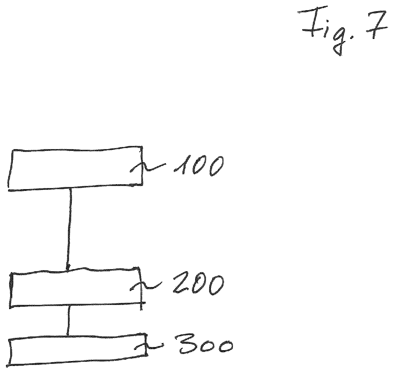

Mit Hilfe des Portalsystems 38 lässt sich die automatische Einstreueinrichtung 34 und insbesondere der Strohkorb 40 in einer Ebene oberhalb der Bucht 2b bewegen. Hierzu weist die Einstreueinrichtung parallel zur Außenwand 12 verlaufende Tragschienen 42 und 44 auf, auf denen mit Hilfe eines Elektromotors 46 senkrecht dazu verlaufende und in den Schienen 42 und 44 geführte Schienen 47 und 48 parallel zur Seitenwand 12 verfahrbar sind. Der Strohkorb 40 lässt sich wiederrum mit Hilfe eines in Figur 6 dargestellten Elektromotors 49 entlang der Schienen 47 und 48 quer zur Bewegungsrichtung der Schienen 47 und 48 verfahren. Auf diese Weise ist die automatische Einstreueinrichtung 34 in der Lage Einstreumaterial, insbesondere Stroh, beispielsweise an der in Figur 1 dargestellten Position des Strohkorbs 40 durch eine nicht dargestellte Dachluke in dem nicht dargestellten Dach aufzunehmen und entsprechend des Bedarfs spezifisch in den Aufenthaltsbereich 6b, insbesondere in den vorstehend definierten Bewegungsbereich 10 gezielt einzustreuen. Eine bevorzugte Ausführungsform des hierzu verwendeten erfindungsgemäßen Verfahrens wird im Folgenden insbesondere mit Bezug auf Figur 7 noch näher beschrieben.

Der in der Figur 1 dargestellte Strohstall 2 weist jedoch eine automatische Einstreueinrichtung 34 auf, die insbesondere im Bewegungsbereich 10 ein automatisches Erst-Einstreuen von zerfasertem Stroh bis zu einer im Wesentlichen gleichmäßigen und vorbestimmten Dicke der Strohmatte 8 vornehmen kann.

Die automatische Einstreueinrichtung 34 ist darüber hinaus in der Lage, vor, nach und/oder auch gleichzeitig mit dem Erst-Einstreuen von Stroh ein einen Rotteprozess förderndes und Fäulnis im Wesentlichen verhinderndes, bevorzugt einen mineralischen Bodenhilfsstoff enthaltenes, Kompostierungsmittel mit Hilfe des Strohkorbs 40 an jeden Ort innerhalb der Bucht 2b abzuwerfen, bevorzugt an jeden Ort innerhalb des Bewegungsbereiches 10.

Die automatische Einstreueinrichtung 34 ist weiterhin in der Lage nach dem Erst-Einstreuen von Stroh durch automatisches, bedarfsgerechtes Nachstreuen die Dicke der nach dem Erst-Einstreuen vorhandenen Strohmatte 8 um beispielsweise 0,05 m auf dann 0,2 m, wie in der Figur 1 dargestellt, zu erhöhen. Diese Dicke des Nachstreuens liegt somit bei der hier dargestellten Ausführungsform zwischen etwa 5 % und etwa 10 % der nach dem Erst-Einstreuen vorhandenen Dicke der Strohmatte 8.

Die automatische Einstreueinrichtung 34 ist darüber hinaus in der Lage, ein Vorhandensein von im Verhältnis zur übrigen Strohmatte 8 feuchteren Stellen 36 der Strohmatte 8 automatisch zu erfassen, und auf die erfassten, im Verhältnis zur übrigen Strohmatte 8 feuchteren Stellen 36 der Strohmatte 8 automatisch gezielt, als Gemisch aus zerfasertem und langfaserigem Stroh vorliegendes, ein einen Rotteprozess förderndes und Fäulnis im Wesentlichen verhinderndes, einen mineralischen Bodenhilfsstoff enthaltenes Kompostierungsmittel enthaltenes Stroh nachzustreuen. Mit anderen Worten ist die automatische Einstreueinrichtung 34 somit in der Lage anhand einer sensorischen Bewertung der vorhandenen Strohmatte 8 den Bedarf von nachzustreuendem Stroh zu bestimmen, beispielsweise optisch im Rahmen einer Bildauswertung beispielsweise mit Hilfe einer Kamera, die im sichtbaren oder auch im nicht sichtbaren Bereich des Lichts arbeiten kann. Alternativ oder zusätzlich sind nicht optische Sensoren, beispielsweise Ultraschallsensoren, induktive Sensoren oder auch kapazitive Sensoren denkbar. Die Ermittlung der Bereiche 36, an dem ein Nachstreuen von Stroh und/oder eines Kompostierungsmittels notwendig ist, kann dabei instantan, d.h. augenblicklich beim Überfahren der Buchten erfolgen und auch das Nachstreuen von Stroh kann sofort erfolgen; alternativ ist es jedoch auch denkbar, dass die sensorische Bestandsaufnahme der vorhandenen Strohmatte 8 oder auch aller Strohmatten 8 im Strohstall 2 zunächst in einem ersten Schritt erfolgt und das Nach-Streuen dann erst in einem zweiten Schritt erfolgt. Bei einer solchen Variante ist es beispielsweise möglich, die Zusammensetzung des nachzustreuenden Strohs entsprechend anzupassen, durch Wahl entsprechender Verhältnisse von zerfasertem, langfaserigem Stroh und/oder Kompostierungsmittel.

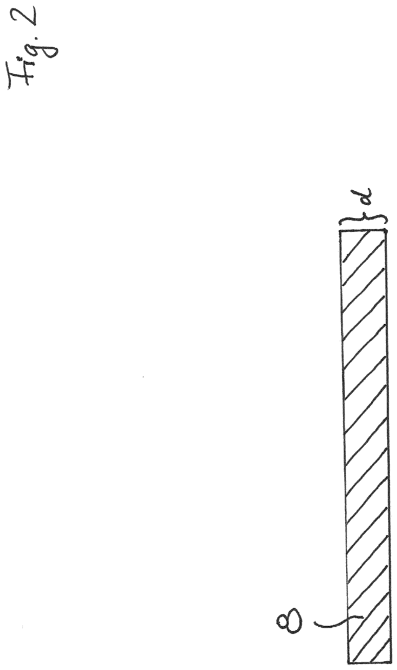

Figur 2 zeigt eine Strohmatte 8, wie sie beispielsweise in dem Bewegungsbereich 10 des Strohstalls der Figur 1 eingebracht bzw. verwendet werden kann. Die Strohmatte 8 weist in dem in der Figur 2 dargestellten Ausführungsbeispiel eine im Wesentlichen gleichmäßige, aus zerfasertem Stroh gebildete, trittelastische Dicke d von 0,2 m auf. Zur Erfüllung der Funktion einer Unterlage für Nutztiere ist es ausreichend, wenn die Strohmatte eine im Wesentlichen gleichmäßige Dicke von nach dem Erst-Einstreuen von Stroh maximal 0,05 m aufweist. Die Strohmatte 8 kann jedoch nach dem Erst-Einstreuen auch jede andere durchschnittliche Dicke von etwa 0,025 m bis etwa 0,2 m aufweisen. Nach einem Besatz mit Nutztieren kann die Strohmatte 8 Dicken zwischen etwa 0,1 m und etwa 0,5 m aufweisen.

Bevorzugt wird die Strohmatte 8 der Ausführungsform der Figur 2 mit einem erfindungsgemäßen Verfahren zur Herstellung einer Strohmatte in einem in einem Strohstall vorgesehenen Aufenthaltsbereich für Nutztiere, insbesondere für Sauen und/oder Mastschweine und/oder Ferkel hergestellt. Besonders bevorzugt wird eine Strohmatte 8 gemäß Figur 2 nach einem Verfahren hergestellt, wie es beispielhaft mit Bezug auf die Figur 7 beschrieben ist.

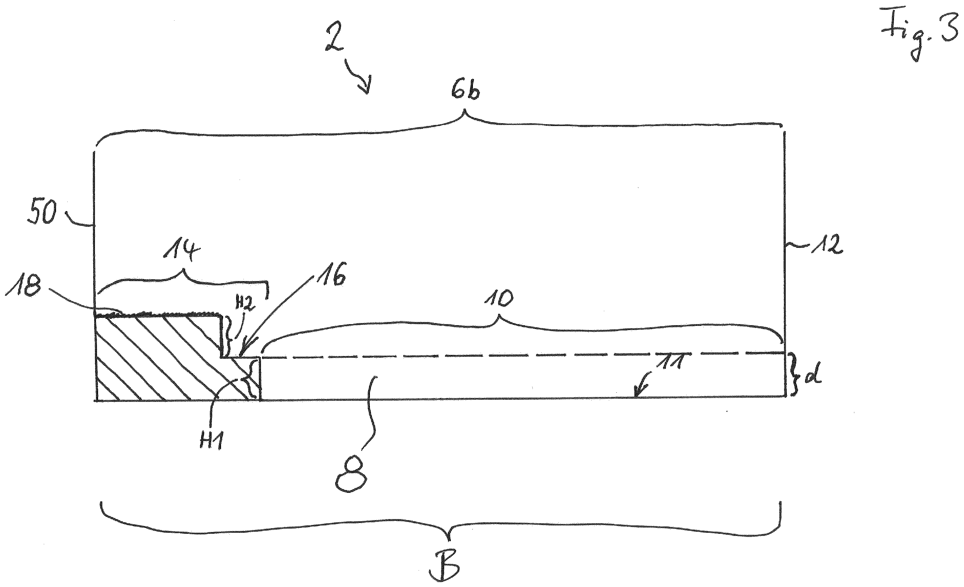

Figur 3 zeigt einen weiteren Strohstall 2. Die in der Figur 3 dargestellte Ausführungsform des Strohstalls 2 kann, muss aber nicht alle Merkmale des Strohstalls 2 gemäß der ersten Ausführungsform gemäß Figur 1 aufweisen.

Der Strohstall 2 der zweiten Ausführungsform gemäß Figur 3 weist einen Aufenthaltsbereich 6b auf. Der Aufenthaltsbereich ist in einer schematischen Schnittansicht dargestellt. Der Aufenthaltsbereich weist einen als Bewegungsbereich 10 dienenden, im Wesentlichen ebenen, bevorzugt mittels einer im Wesentlichen glatten Betonplatte dargestellten, spaltenfreien Boden 11 auf und einen gegenüber dem Boden 11 treppenförmig erhöhten, als Fütterungs- und Tränkenbereich des Aufenthaltsbereichs 6b dienenden Sockel 14 auf. Der Sockel 14 weist eine Treppenstufe 16 auf, die um eine Höhe H1 von 0,2 m gegenüber dem Boden 11 erhöht ist. Der Sockel 14 weist darüber hinaus eine zum Klauen-Abrieb für die Nutztiere leicht angeraute Oberfläche 18 auf, die gegenüber der Treppenstufe 16 um eine Höhe H2 von ebenfalls 0,2 m erhöht ist.

In dem Bewegungsbereich 10 des Aufenthaltsbereichs 6b befindet sich eine Strohmatte 8. Bei der Strohmatte 8 der Figur 3 kann es sich beispielsweise bevorzugt um die Strohmatte 8 der Figur 2 und/oder auch um die Strohmatte 8 der Figur 1 handeln. Die Strohmatte 8 der Figur 3 weist beispielsweise eine Dicke d von 0,2 m auf. Die Strohmatte 8 der Figur 3 ist durch Erst-Einstreuen von Stroh bis zu einer Höhe von 0,15 m und durch anschließendes Nachstreuen von Stroh bis zu der Dicke d von 0,2 m entstanden.

Der Aufenthaltsbereich, insbesondere der Fütterungs- und Tränkenbereich 14 ist in der Figur 3 links dargestellt durch eine Buchtentrennwand 50 begrenzt, und ist in der Figur 3 rechts dargestellt durch eine Außenwand 12 des Strohstalls 2 begrenzt. In Richtung senkrecht in die Papierebene der Figur 3 hinein ist der Aufenthaltsbereich 6b beispielsweise durch eine Wand 14 des Stallgebäudes 1 der Figur 1 begrenzt, während der Aufenthaltsbereich 6b zum Betrachter hin beispielsweise durch eine Buchtentrennwand 22 gemäß Figur 1 begrenzt ist.

In der in Figur 3 dargestellten Ausführungsform nimmt der Sockel 14 etwa 25 % an der Gesamtbreite B des Aufenthaltsbereichs 6b ein. Bevorzugt nimmt der Sockel 14 etwa 20 % der Grundfläche des Aufenthaltsbereichs 6b ein.

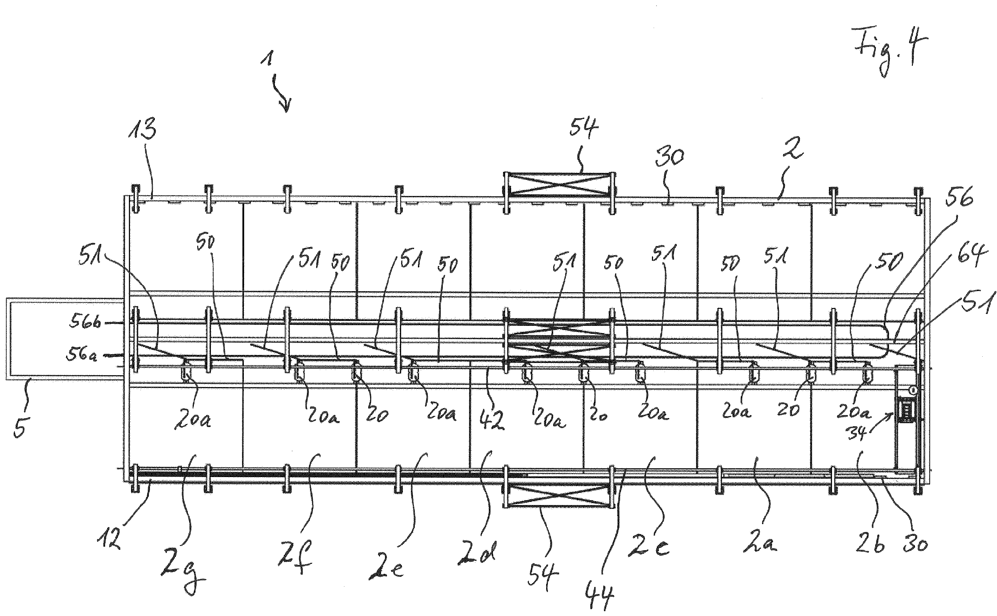

Figur 4 zeigt eine schematische Draufsicht auf ein weiteres Stallgebäude 1 ohne Dach. Das Stallgebäude 1 der Figur 4 ist bevorzugt im Wesentlichen funktionsgleich mit dem Stallgebäude 1 der Figur 1.

Im Gegensatz zu dem Stallgebäude 1 der Figur 1 sind die in der Figur 1 geschlossen dargestellten, schwenkbaren Teile 51 der Buchtentrennwände 50 in der Figur 4 halboffen dargestellt. Dabei sind in der Figur 4 die offenen Teile 51 der Buchtentrennwände 50 in den rechten vier Buchten 2a, 2b, 2c und 2d dargestellt, während in den links dargestellten drei Buchten 2e-2g die schwenkbaren Teile 51 einen linken Teil der jeweiligen Buchtentrennwand 50 bilden.

Darüber hinaus weist das Stallgebäude außerhalb der seitlichen Außenwände 12 bzw. 13 Kreuzverstrebungen 54 auf, um gegebenenfalls in der Schiene 44 (an der Seitenwand 13 nicht dargestellt) auftretenden dynamischen Kräften entgegenzuwirken. Entsprechende Kreuzverstrebungen 54 sind auch im Zentralbereich des Stallgebäudes 1 vorgesehen und mit der Schiene 42 (die mögliche, den oberen Buchten zugewandte Schiene ist wie auch in der Figur 1 nicht dargestellt) entstehenden dynamischen Kräften entgegenzuwirken.

Zusätzlich zu der Ausführungsform der Figur 1 weist das Stallgebäude 1 bzw. der Strohstall 2 der Figur 4 in den Buchten 2a-2f einen in der Mitte des als Fütterungs- und Tränkenbereich dienenden Sockels 14 eine Fütterungsstation 20a auf.

Wie auch in der Ausführungsform der Figur 1 schematisch angedeutet, weist auch die Ausführungsform des Strohstalls 1 der Figur 4 eine im zentralen Bereich vorgesehene, ringförmige Versorgungsleitung 56 zur Versorgung der Fütterungsstationen 20 und 20a auf. Hierzu wird die Versorgungsleitung in einem bevorzugt vorgesehenen Nebengebäude 5 des Stallgebäudes 1 über einen Versorgungseingang 56a gespeist und über einen Versorgungsausgang 56b zurückgefördert.

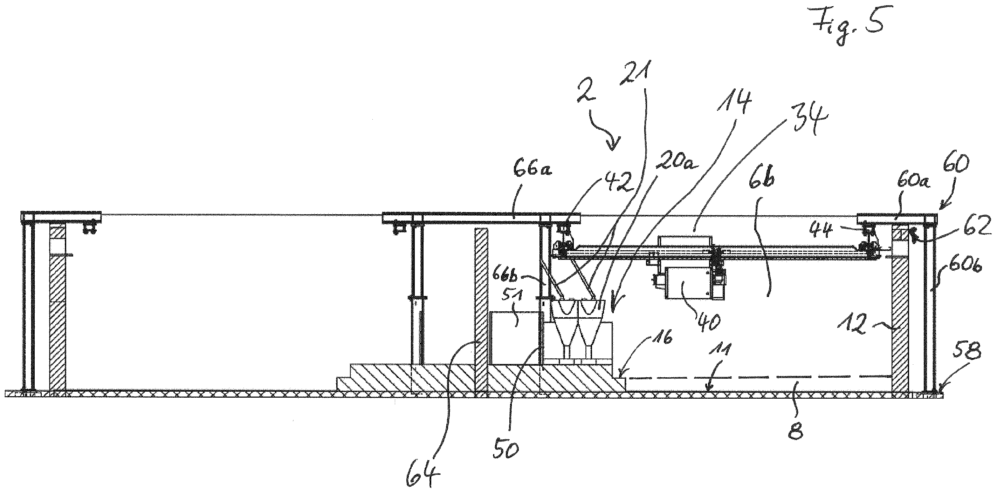

Figur 5 zeigt eine schematische, teilweise geschnittene Seitenansicht eines Strohstalls. Bevorzugt entspricht der in der Figur 5 dargestellte Strohstall in seinen Funktionen im Wesentlichen einem oder beiden Ausführungsformen des Strohstalls 2 gemäß den Figuren 1 und 3. Gleiche oder funktionsgleiche Teile sind daher erneut mit den gleichen Bezugszeichen wiedergegeben. Im Übrigen wird auf die Beschreibung der entsprechenden Merkmale des Strohstalls 2 gemäß Figur 1 bzw. gemäß Figur 3 verwiesen. Wie auch bei der Figur 3 ist die Strohmatte 8 aus rein zeichnerischen Gründen mit einer gestrichelten Linie eingezeichnet.

Wie auch in der Ausführungsform der Figur 1 zu erkennen, weist auch der Strohstall 2 der Ausführungsform der Figur 5 außerhalb des Strohstalls 2 in einem Boden 58 versehenes Tragarmsystem 60 auf, an dem die parallel zur Seitenwand verlaufende Schiene 44 des Portalsystems aufgehängt ist. Hierzu verlaufen horizontale kurze Arme 60a des Tragarmsystems 60 von den im Boden verankerten, vertikalen Stützen 60b des Tragarmsystems 60 durch Öffnungen 62 in der Seitenwand 12 hindurch nach innen in den Aufenthaltsbereich 6b.

Ebenso sind an der einer zentralen Innenwand 64 des Strohstalls 2 zugewandten Buchtentrennwand 50 entsprechend spiegelbildlich senkrechte Stützen 66b angeordnet, an denen im Unterschied zu den Stützen 60b an der Seitenwand 12 jedoch die zentrale Innenwand 64 überspannende horizontale Arme 66a, die der Buchtentrennwand 50 zugewandte Schiene 42 halten. Weiterhin sind schematisch Versorgungsleitungen 21 angedeutet, die die Futterstation 20a mit der zentralen Versorgungsleitung 56 (in der Figur 5 nicht dargestellt) verbinden.

Figur 6 zeigt eine vergrößerte, schematische Einzelansicht der automatischen Einstreueinrichtung 34 gemäß den Figuren 1, 4 und 5. Gleiche beziehungsweise funktionsgleiche Teile sind mit denselben Bezugszeichen bezeichnet.

Figur 7 zeigt eine schematische Darstellung einer Ausführungsform eines erfindungsgemäßen Verfahrens. Die Ausführungsform der Figur 7 zeichnet sich dadurch aus, dass ein Verfahren zur Herstellung einer Strohmatte, beispielsweise einer Strohmatte 8 nach einem der vorstehenden Ausführungsformen, in einem in einem Strohstall, beispielweise einem Strohstall 2 nach einem der vorstehenden Ausführungsformen, vorgesehenen Aufenthaltsbereich, beispielsweise einem Aufenthaltsbereich 6b nach einem der vorstehenden Ausführungsformen, für Nutztiere, insbesondere für Sauen und/oder Mastschweine und/oder Ferkel, gemäß Schritt 100 ein automatisches Erst-Einstreuen von, bevorzugt zerfasertem, Stroh in den Aufenthaltsbereich bis zu einer im Wesentlichen gleichmäßigen Dicke der Strohmatte erfolgt, wobei das Erst-Einstreuen bis zu einer im Wesentlichen gleichmäßigen, maximal 0,2 m, bevorzugt maximal 0,1 m, weiter bevorzugt maximal 0,05 m, betragenden Dicke d der Strohmatte 8 erfolgt.

Da in dem Aufenthaltsbereich ein Trennelement vorgesehen ist, welches an einen Bewegungsbereich für die Nutztiere von einem Trink- und Fressbereich für die Nutztiere trennt, erfolgt das Erst-Einstreuen bis zu einer im Wesentlichen gleichmäßigen, maximal 50 %, bevorzugt maximal 20 %, einer an die Strohmatte direkt angrenzenden Höhe des Trennelements betragenden Dicke der Strohmatte.

Bevorzugt wird in einem Schritt 200 ein ein Rotteprozess förderndes und Fäulnis im Wesentlichen verhinderndes, einen mineralischen Bodenhilfsstoff aufweisendes Kompostierungsmittel in den Aufenthaltsbereich gegeben. Alternativ kann der Schritt 200 auch gleichzeitig mit dem Schritt 100 ausgeführt werden.

Es folgt ein weiterer Schritt 300, bei dem die Dicke der Strohmatte nach dem Erst-Einstreuen durch automatisches, bedarfsgerechtes Nachstreuen um maximal 20 %, bevorzugt maximal 10 %, weiter bevorzugt maximal 5 %, der Dicke der nach dem Erst-Einstreuen gemäß Schritt 100 vorhandenen Strohmatte erhöht.

Bevorzugt wird die Dicke d der Strohmatte 8 nach dem Erst-Einstreuen durch automatisches, bedarfsgerechtes Nachstreuen in einem Bereich von maximal 0,5 m, bevorzugt maximal 0,3 m, weiter bevorzugt maximal 0,2 m, noch weiter bevorzugt maximal 0,1 m, eingestellt.

Bevorzugt wird in dem Strohstall 2, bevorzugt im Aufenthaltsbereich 6b, weiter bevorzugt in einem Bereich direkt oberhalb, bevorzugt 1 bis 2,4 m, weiter bevorzugt 1 bis 2 m, noch weiter bevorzugt 1 bis 1,5 m oberhalb, der Strohmatte 8, eine bestimmte Lufttemperatur und/oder eine bestimmte Luftfeuchtigkeit und/oder eine bestimmte CO₂-Konzentration und/oder eine bestimmte NH₃-Konzentration und/oder ein bestimmter Luftdruck eingestellt.

Das erfindungsgemäße Verfahren gemäß Figur 7 weist die weiteren Schritte auf: Ein Vorhandensein von im Verhältnis zur übrigen Strohmatte 8 feuchteren Stellen der Strohmatte 8 wird automatisch erfasst, und auf die erfassten, im Verhältnis zur übrigen Strohmatte 8 feuchteren Stellen der Strohmatte 8 wird automatisch gezielt, bevorzugt als Gemisch aus zerfasertem und langfaserigem Stroh vorliegendes, weiter bevorzugt ein einen Rotteprozess förderndes und Fäulnis im Wesentlichen verhinderndes, noch weiter bevorzugt einen mineralischen Bodenhilfsstoff enthaltendes, Kompostierungsmittel enthaltendes, Stroh nachgestreut (diese Schritte sind in Figur 7 nicht dargestellt).

## Patentansprüche

1. Verfahren zur Herstellung einer Strohmatte (8) in einem in einem Strohstall (2) vorgesehenen Aufenthaltsbereich (6b) für Nutztiere, insbesondere für Sauen und/oder Mastschweine und/oder Ferkel,
mit dem Schritt: automatisches Erst-Einstreuen von, bevorzugt zerfasertem, Stroh in den Aufenthaltsbereich (6b) bis zu einer im Wesentlichen gleichmäßigen Dicke (d) der Strohmatte (8),
wobei in dem Aufenthaltsbereich (6b) ein Trennelement (14) vorgesehen ist, welches einen Bewegungsbereich (10) für die Nutztiere von einem Trink- und Fressbereich (14) für die Nutztiere trennt,
wobei das Erst-Einstreuen bis zu einer maximal 50% einer an die Strohmatte (8) direkt angrenzenden Höhe des Trennelements (14) betragenden Dicke (d) der Strohmatte (8) erfolgt,
wobei als der direkt an die Strohmatte angrenzende Teil des Trennelements eine Stufe eines Sockels fungiert, wobei der Sockel als der Trink- und Fressbereich dient und erhöht ist gegenüber einem im Wesentlichen ebenen Boden, der als der Bewegungsbereich dient,
ferner mit dem Schritt: die Dicke (d) der Strohmatte (8) wird nach dem Erst-Einstreuen durch automatisches, bedarfsgerechtes Nachstreuen um maximal 20%, der Dicke (d) der nach dem Erst-Einstreuen vorhandenen Strohmatte (8) erhöht.

2. Verfahren nach dem vorstehenden Anspruch,
wobei das Erst-Einstreuen bis zu einer im Wesentlichen gleichmäßigen, maximal 0,2 m, bevorzugt maximal 0,1 m, weiter bevorzugt maximal 0,05 m, betragenden Dicke (d) der Strohmatte (8) erfolgt.

3. Verfahren nach einem der vorstehenden Ansprüche,
wobei das Erst-Einstreuen bis zu einer maximal 20%, einer an die Strohmatte (8) direkt angrenzenden Höhe des Trennelements (14) betragenden Dicke (d) der Strohmatte (8) erfolgt.

4. Verfahren nach einem der vorstehenden Ansprüche,
mit dem Schritt: Ausbringen eines einen Rotteprozess fördernden und Fäulnis im Wesentlichen verhindernden, bevorzugt einen mineralischen Bodenhilfsstoff aufweisenden, Kompostierungsmittels in den Aufenthaltsbereich (6b).

5. Verfahren nach einem der vorstehenden Ansprüche,
wobei das Erst-Einstreuen mit Stroh erfolgt, welches ein einen Rotteprozess förderndes und Fäulnis im Wesentlichen verhinderndes, bevorzugt einen mineralischen Bodenhilfsstoff enthaltendes, Kompostierungsmittel enthält.

6. Verfahren nach einem der vorstehenden Ansprüche,
mit dem Schritt: Die Dicke (d) der Strohmatte (8) wird nach dem Erst-Einstreuen durch automatisches, bedarfsgerechtes Nachstreuen in einem Bereich von maximal 0,5 m, bevorzugt maximal 0,3 m, weiter bevorzugt maximal 0,2 m, noch weiter bevorzugt maximal 0,1 m, eingestellt, und/oder
mit dem Schritt: In dem Strohstall (2), bevorzugt im Aufenthaltsbereich (6b), weiter bevorzugt in einem Bereich direkt oberhalb, bevorzugt 1 bis 2,4 m, weiter bevorzugt 1 bis 2 m, noch weiter bevorzugt 1 bis 1,5 m oberhalb, der Strohmatte (8), wird eine bestimmte Lufttemperatur und/oder eine bestimmte Luftfeuchtigkeit und/oder eine bestimmte CO₂-Konzentration und/oder eine bestimmte NH₃-Konzentration und/oder ein bestimmter Luftdruck eingestellt, und/oder
mit den Schritten:
- Ein Vorhandensein von im Verhältnis zur übrigen Strohmatte (8) feuchteren Stellen der Strohmatte (8) wird automatisch erfasst, und
- auf die erfassten, im Verhältnis zur übrigen Strohmatte (8) feuchteren Stellen der Strohmatte (8) wird automatisch gezielt, bevorzugt als Gemisch aus zerfasertem und langfaserigem Stroh vorliegendes, weiter bevorzugt ein einen Rotteprozess förderndes und Fäulnis im Wesentlichen verhinderndes, noch weiter bevorzugt einen mineralischen Bodenhilfsstoff enthaltendes, Kompostierungsmittel enthaltendes, Stroh nachgestreut.

## Claims

1. Method for producing a straw mat (8) in a living space (6b) for livestock, in particular for sows and/or fattening pigs and/or piglets, provided in a straw pen (2), comprising the step: automatic initial spreading of preferably defibrated straw into the living space (6b) up to a substantially uniform thickness (d) of the straw mat (8),
wherein a separating element (14) which separates a moving space (10) for the livestock from a drinking and feeding region (14) for the livestock is provided in the living space (6b),
wherein the initial spreading is performed up to a thickness (d) of the straw mat (8) of at most 50%, of a height of the separating element (14) that is directly adjacent to the straw mat (8),
wherein the part of the separating element directly adjacent to the straw mat is a step of a pedestal, wherein the pedestal serves as the drinking and feeding region and is raised relative to a substantially flat floor which serves as the living space,
furthermore comprising the step: the thickness (d) of the straw mat (8) is increased after the initial spreading by automatic demand-based post-spreading by at most 20% of the thickness (d) of the straw mat (8) present after the initial spreading.

2. Method according to the preceding claim,
wherein the initial spreading is performed up to a substantially uniform thickness (d) of the straw mat (8) of at most 0.2 m, preferably at most 0.1 m, furthermore preferably at most 0.05 m.

3. Method according to one of the preceding claims,
wherein the initial spreading is performed up to a thickness (d) of the straw mat (8) of at most 20%, of a height of the separating element (14) that is directly adjacent to the straw mat (8).

4. Method according to one of the preceding claims,
comprising the step: delivering a composting agent, preferably including a mineral soil additive, which promotes a rotting process and substantially prevents putrefaction into the living space (6b).

5. Method according to one of the preceding claims,
wherein the initial spreading is performed using straw which includes a composting agent, preferably including a mineral soil additive, which promotes a rotting process and substantially prevents putrefaction.

6. Method according to one of the preceding claims,
comprising the step: the thickness (d) of the straw mat (8) after the initial spreading is set by automatic demand-based post-spreading in a range of at most 0.5 m, preferably at most 0.3 m, furthermore preferably at most 0.2 m, even furthermore preferably at most 0.1 m, and/or
comprising the step: a specific air temperature and/or a specific air humidity and/or a specific CO₂ concentration and/or a specific NH₃ concentration and/or a specific air pressure are/is set in the straw pen (2), preferably in the living space (6b), further preferably in a region directly above, preferably 1 to 2.4 m, furthermore preferably 1 to 2 m, even furthermore preferably 1 to 1.5 m above, the straw mat (8), and/or
comprising the steps:
- a presence of areas of the straw mat (8) that are moister in relation to the remaining straw mat (8) is automatically detected; and
- straw which is preferably present as a mixture of defibrated and long-fiber straw and which furthermore preferably includes a composting agent, furthermore preferably including a mineral soil additive, which promotes a rotting process and substantially prevents putrefaction is post-spread in an automatic targeted manner onto the detected areas of the straw mat (8) that are moister in relation to the remaining straw mat (8).

## Revendications

1. Procédé de fabrication d'une litière de paille (8) dans une zone de séjour (6b) prévue dans un bâtiment sur paille (2) pour bétail, en particulier pour truies et/ou porcs et/ou porcelets, avec l'étape : premier paillage automatique de paille, de préférence déchiquetée, dans la zone de séjour (6b) jusqu'à une épaisseur (d) sensiblement homogène de la litière de paille (8), dans lequel un élément de séparation (14), lequel sépare une zone de déplacement (10) pour le bétail d'une zone de boisson et d'alimentation (14) pour le bétail, est prévu dans la zone de séjour (6b),
dans lequel le premier paillage se fait jusqu'à une épaisseur (d) de la litière de paille (8) correspondant à maximum 50 % d'une hauteur directement adjacente à la litière de paille (8) de l'élément de séparation (14),
dans lequel une marche d'une plate-forme fait office de partie directement adjacente à la litière de paille de l'élément de séparation, dans lequel la plate-forme sert de zone de boisson et d'alimentation et est surélevée par rapport à un sol sensiblement plan, qui sert de zone de déplacement,
en outre avec l'étape : l'épaisseur (d) de la litière de paille (8) est augmentée après le premier paillage par repaillage automatique, adapté aux besoins, de maximum 20 %, de l'épaisseur (d) de la litière de paille (8) présente après le premier paillage.

2. Procédé selon la revendication précédente,
dans lequel le premier paillage se fait jusqu'à une épaisseur (d) de la litière de paille (8) sensiblement homogène, correspondant à maximum 0,2 m, de préférence à maximum 0,1 m, de manière davantage préférée à maximum 0,05 m.

3. Procédé selon l'une quelconque des revendications précédentes,
dans lequel le premier paillage se fait jusqu'à une épaisseur (d) de la litière de paille (8) correspondant à maximum 20 %, d'une hauteur directement adjacente à la litière de paille (8) de l'élément de séparation (14).

4. Procédé selon l'une quelconque des revendications précédentes,
avec l'étape : épandage dans la zone de séjour (6b) d'un moyen de compostage favorisant un processus de décomposition et empêchant sensiblement la putréfaction, présentant de préférence un agent d'amélioration minéral du sol.

5. Procédé selon l'une quelconque des revendications précédentes,
dans lequel le premier paillage se fait avec de la paille, laquelle contient un moyen de compostage favorisant un processus de décomposition et empêchant sensiblement la putréfaction, contenant de préférence un agent d'amélioration minéral du sol.

6. Procédé selon l'une quelconque des revendications précédentes,
avec l'étape : l'épaisseur (d) de la litière de paille (8) est réglée après le premier paillage par repaillage automatique, adapté aux besoins dans une plage de maximum 0,5 m, de préférence de maximum 0,3 m, de manière davantage préférée de maximum 0,2 m, de manière encore davantage préférée de maximum 0,1 m, et/ou
avec l'étape : dans le bâtiment sur paille (2), de préférence dans la zone de séjour (6b), de manière davantage préférée dans une zone directement au-dessus, de préférence 1 à 2,4 m, de manière davantage préférée 1 à 2 m, de manière encore davantage préférée 1 à 1,5 m au-dessus, de la litière de paille (8), une certaine température de l'air et/ou une certaine humidité de l'air et/ou une certaine concentration de CO₂ et/ou une certaine concentration de NH₃ et/ou une certaine pression d'air est réglée, et/ou
avec les étapes :
- une présence d'endroits de la litière de paille (8) plus humides par rapport au reste de la litière de paille (8) est automatiquement détectée, et
- sur les endroits de la litière de paille (8) détectés, plus humides par rapport au reste de la litière de paille (8), de la paille est repaillée de manière automatiquement ciblée, de préférence présente en tant que mélange de paille déchiquetée et à fibres longues, de manière davantage préférée contenant un moyen de décomposition favorisant un processus de décomposition et empêchant sensiblement la putréfaction, de manière encore d'avantage préférée contenant un agent d'amélioration minéral du sol.
